# FASCICULE DE BREVET EUROPEEN

(11) **EP 3 023 732 B1**
(45) Date de publication et mention de la délivrance du brevet: **06.06.2018**
(21) Numéro de dépôt: 15194969.0
(22) Date de dépôt: 17.11.2015
(51) Int. Cl.: F42B 15/38, B64G 1/64

(54) **SÉPARATEUR PYROTECHNIQUE COMPRENANT DEUX ÉLÉMENTS STRUCTURELS INDÉPENDANTS ASSEMBLÉS L'UN À L'AUTRE, ET PROCÉDÉ DE FABRICATION ASSOCIÉ**
PYROTECHNISCHE TRENNVORRICHTUNG, DIE ZWEI UNABHÄNGIGE STRUKTURELEMENTE UMFASST, DIE ZUSAMMENGEBAUT SIND, UND ENTSPRECHENDES HERSTELLUNGSVERFAHREN
PYROTECHNICAL SEPARATOR COMPRISING TWO INDEPENDENT STRUCTURAL ELEMENTS ASSEMBLED TO EACH OTHER, AND ASSOCIATED FABRICATION METHOD

(30) Priorité: 19.11.2014 FR 1402606
(43) Date de publication de la demande: 25.05.2016
(73) Titulaire: Dassault Aviation, 75008 Paris (FR)
(72) Inventeur: MARTIN, Bernard, 95370 Montigny les Cormeilles (FR)
(74) Mandataire: Lavoix

(56) Documents cités:
- EP-A1- 0 472 453
- FR-A1- 2 638 228
- US-A- 3 230 885
- US-A- 5 969 287

## Description

La présente invention concerne un séparateur pyrotechnique conçu pour permettre la séparation entre deux pièces mécaniques temporairement assemblées l'une à l'autre par l'intermédiaire dudit séparateur, le séparateur pyrotechnique étant du type comprenant :
- un premier et un deuxième flancs liés l'un à l'autre le long d'une ligne de liaison, au moins un desdits flancs présentant une zone de faiblesse courant sensiblement parallèlement à la ligne de liaison,
- au moins un cordon pyrotechnique apte à se déformer lors de l'activation dudit cordon suivant une direction de déformation, ledit cordon pyrotechnique étant enserré entre les premier et deuxième flancs et courant sensiblement parallèlement à ladite ligne de liaison, et
- des moyens d'activation dudit cordon pyrotechnique pour provoquer la rupture d'au moins un des premier et deuxième flancs suivant la ou chaque zone de faiblesse,
la ou chaque zone de faiblesse étant interposée entre l'axe du ou de chaque cordon pyrotechnique et la ligne de liaison.

Un tel séparateur est bien connu, par exemple de FR-A-2 833 694 et de EP 0 472 453, et trouve une application notamment dans l'industrie aérospatiale, où on l'utilise en particulier pour assurer la séparation d'éléments de lanceurs spatiaux.

Une caractéristique essentielle d'un tel séparateur est le fait que la surface de cassure est interposée entre l'axe du ou de chaque cordon pyrotechnique et la ligne de liaison. Une telle disposition facilite en effet la rupture en cisaillement des flancs au niveau de la surface de cassure, ce qui permet d'utiliser des tubes avec des charges pyrotechniques moins importantes que dans les séparateurs classiques où la surface de cassure comprend l'axe du tube pyrotechnique, comme par exemple dans le séparateur décrit dans US 3 698 281.

Les flancs de ces séparateurs connus sont réalisés d'un seul bloc, de façon à empêcher lesdits flancs de s'écarter l'un de l'autre lors de l'activation du cordon pyrotechnique, et ainsi assurer une concentration suffisante de contraintes dans les zones de faiblesse pour garantir une rupture des flancs suivant la surface de cassure. Une telle réalisation des flancs rend toutefois la fabrication de ces séparateurs coûteuse et complexe, notamment en raison des difficultés d'usinage des flancs et de l'encombrement des pièces.

Un objectif de l'invention est de simplifier la fabrication des séparateurs pyrotechniques du type précité.

A cet effet, l'invention a pour objet un séparateur pyrotechnique selon la revendication 1. Selon des modes de réalisation particuliers de l'invention, le séparateur présente également l'une ou plusieurs des caractéristiques suivantes, prise(s) isolément ou suivant toute(s) combinaison(s) techniquement possible(s) :
- chacun des premier et deuxième élément structurels est formé de la réunion d'une pluralité de secteurs juxtaposés les uns aux autres, les secteurs formant le premier élément structurel définissant entre eux des premières lignes de jonction desdits secteurs les uns aux autres et les secteurs formant le deuxième élément structurel définissant entre eux des deuxièmes lignes de jonction desdits secteurs les uns aux autres, chaque première ligne de jonction étant décalée suivant la ligne de liaison par rapport à chaque deuxième ligne de jonction ;
- chaque première ligne de jonction est sensiblement à équidistance des deux deuxièmes lignes de jonction les plus proches ;
- chaque deuxième ligne de jonction est sensiblement à équidistance des deux premières lignes de jonction les plus proches ;
- le séparateur a une forme annulaire ou semi-annulaire ;
- le premier flanc est interposé entre l'axe du séparateur et le cordon pyrotechnique, et le deuxième flanc est disposé à l'extérieur du séparateur relativement au cordon pyrotechnique ;
- le séparateur comprend des moyens d'assemblage des premier et deuxième éléments structurels l'un à l'autre, lesdits moyens d'assemblage comportant au moins un élément parmi les éléments suivants : boulon s'étendant au travers des premier et deuxième éléments structurels, et rivet ;
- la direction d'encastrement des premier et deuxième éléments structurels est sensiblement orthogonale à la direction de déformation du cordon pyrotechnique ;
- la distance de la ou chaque zone de faiblesse à la ligne de liaison est inférieure à huit fois l'épaisseur moyenne des première et deuxième zones de faiblesse ;
- les zones de faiblesse comprennent une première zone de faiblesse ménagée dans le premier flanc et une deuxième zone de faiblesse ménagée dans le deuxième flanc ;
- l'une des pièces mécaniques présente deux flancs enserrant ensemble les premier et deuxième éléments structurels entre lesdits flancs.

L'invention a également pour objet un procédé de fabrication d'un séparateur pyrotechnique tel que défini ci-dessus, comprenant les étapes suivantes :
- fourniture d'au moins une partie du premier élément structurel et d'au moins une partie du deuxième élément structurel, lesdites parties étant séparées l'une de l'autre, et
- assemblage desdites parties l'une à l'autre.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique, en perspective, d'un dispositif de séparation comprenant un séparateur pyrotechnique selon un premier mode de réalisation de l'invention,
- la Figure 2 est une vue en coupe du dispositif de la Figure 1, suivant une première variante de l'invention,
- la Figure 3 est une vue en coupe du dispositif de la Figure 1, suivant une deuxième variante de l'invention, et
- la Figure 4 est une vue en coupe d'un dispositif de séparation comprenant un séparateur pyrotechnique selon un deuxième mode de réalisation ne formant pas partie de l'invention.

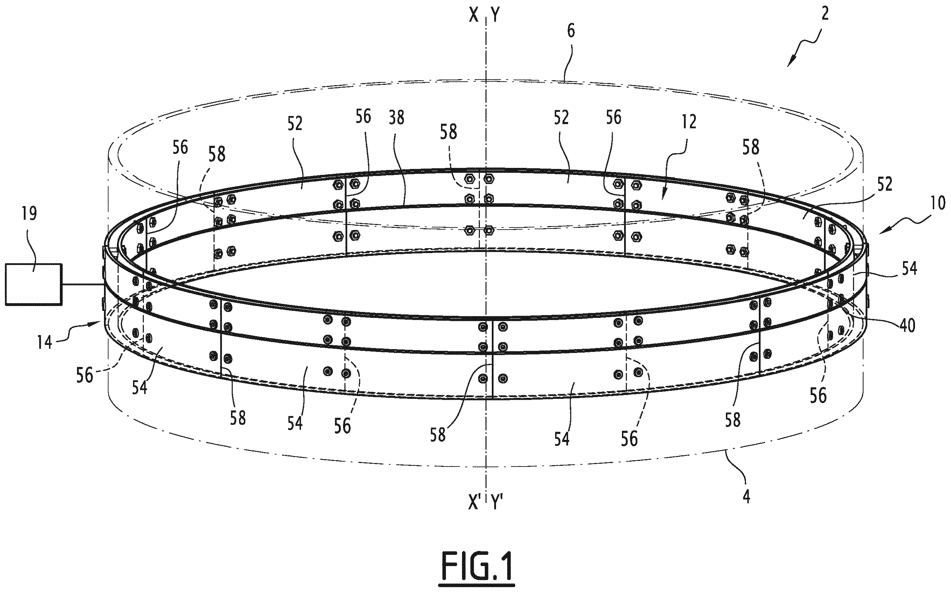

Le dispositif de séparation 2 selon l'invention, représenté sur la Figure 1, est un dispositif de séparation d'éléments d'un lanceur spatial. Il comprend une première pièce mécanique 4 en forme de virole, cylindrique de révolution, et une deuxième pièce mécanique 6, également en forme de virole, surmontant la première pièce 4. Pour des raisons de clarté des dessins, les première et deuxième pièces 4, 6 ont été représentées en traits mixtes sur la Figure 1.

Chacune des première et deuxième pièces 4, 6 est typiquement constituée en alliage d'aluminium ou en composite, par exemple en polymère à renfort fibre de carbone.

La première pièce 4 constitue typiquement un étage inférieur d'un lanceur. La deuxième pièce 6 constitue typiquement un étage supérieur d'un lanceur, par exemple une case à équipement.

Le dispositif de séparation 2 comprend également, à l'interface entre les première et deuxième pièces 4, 6, un séparateur pyrotechnique 10 assemblant les première et deuxième pièces 4, 6 l'une à l'autre. Ce séparateur pyrotechnique 10 est, dans l'exemple représenté, de forme annulaire. En variante, le séparateur pyrotechnique 10 a une forme semi-annulaire, une forme de quart d'anneau, ou présente toute autre forme appropriée. Dans une autre variante, le séparateur pyrotechnique présente une forme linéaire et est utilisé par exemple pour réaliser le largage des fusées accélératrices des lanceurs spatiaux.

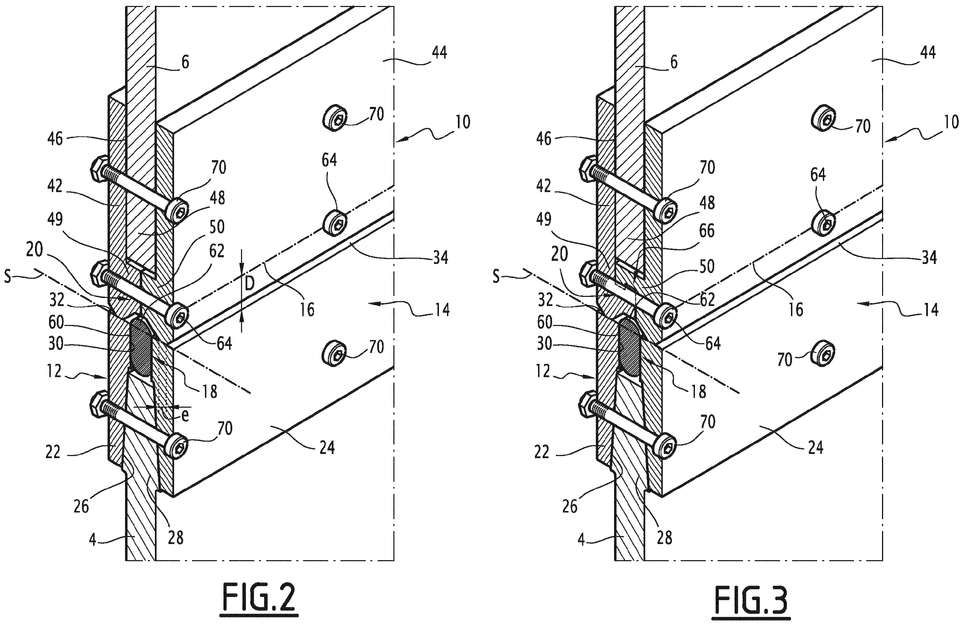

En référence à la Figure 2, le séparateur pyrotechnique 10 comprend un premier élément structurel 12 et un deuxième élément structurel 14 indépendants l'un de l'autre et assemblés l'un à l'autre suivant une ligne de liaison 16, un cordon pyrotechnique 18, des moyens 19 (Figure 1) d'activation du cordon pyrotechnique 18, et des moyens 20 d'assemblage des premier et deuxième élément structurels 12, 14 l'un à l'autre.

Chacun des premier et deuxième éléments structurels 12, 14 est de forme annulaire et présente un axe central, respectivement X-X', Y-Y' (Figure 1). Lesdits premier et deuxième éléments structurels 12, 14 sont sensiblement coaxiaux l'un à l'autre. Le premier élément structurel 12 est interposé entre le deuxième élément structurel 14 et l'axe Y-Y' du deuxième élément structurel 14 et constitue ainsi un élément structurel interne du séparateur 10, le deuxième élément structurel 14 constituant ainsi un élément structurel externe du séparateur 10.

Chacun des premier et deuxième éléments structurels 12, 14 est réalisé en un matériau susceptible d'être rompu en cisaillement par un cordon pyrotechnique, par exemple en alliage d'aluminium.

La ligne de liaison 16 est définie comme étant une ligne suivant laquelle est disposée au moins une partie des moyens 20 d'assemblage des premier et deuxième élément structurels 12, 14 l'un à l'autre. Ladite ligne de liaison 16 est en particulier sensiblement comprise dans un plan radial du séparateur 10.

Le premier élément structurel 12 comprend un premier flanc 22 et le deuxième élément structurel 14 comprend un deuxième flanc 24, lesdits premier et deuxième flancs 22, 24 s'étendant sensiblement orthogonalement à la ligne de liaison 16 depuis la ligne de liaison 16, dans une même direction. En particulier, chacun des premier et deuxième flancs 22, 24 s'étend axialement vers le bas depuis la ligne de liaison 16.

Les premier et deuxième flancs 22, 24 se font face en s'étendant sensiblement parallèlement l'un à l'autre. Ils sont espacés l'un de l'autre de façon à définir entre eux une première fente 26 de réception du premier élément 4 dans laquelle est inséré un bord 28 dudit premier élément 4.

Le bord 28 est inséré dans la première fente 26 de façon à ne la combler qu'en partie, de sorte que la première pièce 4 définit avec les premier et deuxième flancs 22, 24 une chambre 30 longiligne interposée entre le bord 28 et la ligne de liaison 16.

Les premier et deuxième flancs 22, 24 présentent chacun respectivement une première zone de faiblesse 32 et une deuxième zone de faiblesse 34, sensiblement parallèles l'une à l'autre et allongées chacune suivant une direction sensiblement parallèle à la ligne de liaison 16. Chaque zone de faiblesse 32, 34 est en particulier formée par une zone de moindre épaisseur radiale du flanc, respectivement 22, 24, comprise entre deux zones d'épaisseurs plus importantes. Chaque zone de faiblesse 32, 34 est en particulier définie par des entailles ou rainures creusées dans les deux faces en regard du flanc 12, 14 dans lequel elle est formée.

Chaque zone de faiblesse 32, 34 est à une distance D aussi faible que possible de la ligne de liaison 16 et de préférence inférieure à huit fois l'épaisseur moyenne e des première et deuxième zones de faiblesse 32, 34.

Les zones de faiblesse 32, 34 définissent ensemble une surface S de cassure du séparateur 10.

Le premier élément structurel 12 comprend également un troisième flanc 42 et le deuxième élément structurel 14 comprend un quatrième flanc 44, lesdits troisième et quatrième flancs 42, 44 s'étendant sensiblement orthogonalement à la ligne de liaison 16 depuis la ligne de liaison 16, dans une direction opposée à la direction d'extension des premier et deuxième flancs 22, 24. Les troisième et quatrième flancs 42, 44 sont ainsi sensiblement parallèles aux premier et deuxième flancs 22, 24. En particulier, chacun des troisième et quatrième flancs 42, 44 s'étend axialement vers le haut depuis la ligne de liaison 16.

Les troisième et quatrième flancs 42, 44 se font face en s'étendant sensiblement parallèlement l'un à l'autre. Ils sont espacés l'un de l'autre de façon à définir entre eux une deuxième fente 46 de réception de la deuxième pièce 6, dans laquelle est inséré un bord 48 de ladite deuxième pièce 6.

Dans l'exemple représenté, le premier élément structurel 12 comprend en outre un premier noyau 49, interposé entre les premier et troisième flancs 22, 42, et le deuxième élément structurel 14 comprend un deuxième noyau 50, interposé entre les deuxième et troisièmes flancs 24, 54. Chaque noyau 49, 50 s'étend le long de la ligne de liaison 16.

Le premier noyau 49 a une épaisseur radiale supérieure à celle des flancs 22, 42, et il dépasse vers le deuxième élément structurel 14 relativement auxdits flancs 22, 42. Le deuxième noyau 50 a une épaisseur radiale supérieure à celle des flancs 24, 44, et il dépasse vers le premier élément structurel 12 relativement auxdits flancs 24, 44.

Les noyaux 49, 50 sont en contact l'un avec l'autre et définissent ensemble un fond de la première fente 26 et un fond de la deuxième fente 46. La réunion des premier et deuxième éléments structurels 12, 14 a ainsi une section droite sensiblement en forme de H.

De retour à la Figure 1, le premier élément structurel 12 est constitué de la réunion d'une pluralité de premiers secteurs 52 juxtaposés les uns aux autres suivant la ligne de liaison 16, et le deuxième élément structurel 14 est constitué de la réunion d'une pluralité de deuxième secteurs 54 juxtaposés les uns aux autres suivant la ligne de liaison 16.

Les premiers secteurs 52 définissent entre eux des premières lignes 56 de jonction desdits secteurs 52 les uns aux autres, et les deuxièmes secteurs 54 définissent entre eux des deuxièmes lignes 58 de jonction desdits secteurs 54 les uns aux autres.

Les premières lignes de jonction 56 sont disposées successivement les unes aux autres suivant la ligne de liaison 16, et les deuxièmes lignes de jonction 58 sont disposées successivement les unes aux autres suivant la ligne de liaison 16, chaque première ligne de jonction 56 étant décalée suivant la ligne de liaison 16 par rapport à chaque deuxième ligne de jonction 58. En particulier, chaque première ligne de jonction 56 est sensiblement à équidistance des deux deuxièmes lignes de jonction 58 les plus proches, et chaque deuxième ligne de jonction 58 est sensiblement à équidistance des deux premières lignes de jonction 56 les plus proches.

De retour à la Figure 2, le cordon pyrotechnique 18 est logé dans la chambre 30, de sorte que la surface de cassure S soit interposée entre l'axe du cordon pyrotechnique 18 et la ligne de liaison 16. Le cordon pyrotechnique 18 court sensiblement parallèlement à la ligne de liaison 16.

Le cordon pyrotechnique 18 a une section droite oblongue, ou « écrasée », et est serré entre les flancs 22, 24, qui définissent ensemble une direction de déformation du cordon pyrotechnique 18. Ladite direction de déformation est ainsi, dans l'exemple représenté, une direction radiale.

Le cordon pyrotechnique 18 comprend typiquement un tube métallique expansible 60 garni intérieurement d'un cordon de matière pyrotechnique (non représenté) centré dans le tube 60 par un produit de calage 62. Les moyens d'activation 19 sont adaptés pour allumer la matière pyrotechnique de sorte à provoquer l'expansion du tube 60 suivant la direction de déformation du cordon 18, de manière à entraîner des contraintes dans les flancs 22, 24 provoquant la rupture des premier et deuxième flancs 22, 24 suivant la surface de cassure S. Ces moyens d'activation sont connus et ne seront pas décrits ici plus en détails. Ces moyens d'activation sont par exemple identiques aux moyens d'activation décrits dans FR-A-2 833 694.

Les moyens d'assemblage 20 sont adaptés pour que l'écartement des premier et deuxième éléments structurels 12, 14, lorsqu'un effort d'écartement est appliqué entre les premier et deuxième éléments structurels 12, 14, soit minimal le long de la ligne de liaison 16. A cet effet, les moyens d'assemblage 20 comprennent, dans l'exemple représenté, une pluralité de boulons 64 s'étendant au travers des premier et deuxième éléments structurels 12, 14, de préférence au travers des premier et deuxième noyaux 49, 50, lesdits boulons 64 étant disposés successivement les uns aux autres le long de la ligne de liaison 16.

Dans la variante de la Figure 2, les moyens d'assemblage 20 sont constitués par ces seuls boulons 64.

Dans la variante de la Figure 3, les moyens d'assemblage 20 comprennent, en plus desdits boulons 64, des moyens 66 d'encastrement axial des premier et deuxième éléments structurels 12, 14 l'un dans l'autre. Ces moyens d'encastrement 66 permettent de renforcer la tenue des éléments structurels 12, 14 entre les boulons 64. En effet, les premier et deuxième éléments structurels 12, 14 étant grâce à ces moyens 66 encastrés l'un dans l'autre suivant une direction d'encastrement sensiblement perpendiculaire à la direction de déformation du cordon pyrotechnique 18, cela empêche les premier et deuxième éléments structurels 12, 14, en cas d'activation du cordon pyrotechnique 18, de s'écarter l'un de l'autre suivant la direction d'expansion du cordon 18.

On notera que les moyens d'assemblage 20 ne sont pas limités aux seuls boulons 64 et moyens d'encastrement 66. Ainsi, selon d'autres variantes de l'invention (non représentées), les moyens d'assemblage 20 comprennent également des rivets.

De préférence, les moyens d'assemblage 20 sont des moyens d'assemblage faciles à assembler avec des outils conventionnels.

Le dispositif de séparation 2 comprend également des moyens 70 de fixation du séparateur 10 aux première et deuxième pièces mécaniques 4, 6. Ces moyens de fixation 70 sont de préférence, comme représenté, des boulons s'étendant au travers des flancs 22, 24, 42, 44 et des bords 28, 48 desdites première et deuxième pièces mécaniques 4, 6 insérés entre lesdits flancs 22, 24, 42, 44.

Un procédé de fabrication du dispositif de séparation 2 va maintenant être décrit.

Ce procédé de fabrication débute tout d'abord par la fabrication des premiers et deuxièmes secteurs 52, 54. A cet effet, des plaques de matériau sont fournies, puis chaque plaque est usinée de manière à lui donner la forme d'un premier ou d'un deuxième secteur 52, 54.

Ensuite, les premiers et deuxièmes secteurs 52, 54 sont assemblés les uns aux autres ainsi qu'à la pièce mécanique 6. A cet effet, les premiers secteurs 52 sont juxtaposés les uns aux autres de manière à former un anneau, en étant orientés de manière à ce que leurs noyaux 49 fassent saillie vers l'extérieur. Simultanément, les deuxièmes secteurs 54 sont disposés à l'extérieur des premiers secteurs 52, leurs noyaux 50 étant appliqués contre les noyaux 49 des premiers secteurs 52 et les lignes 58 de jonction des deuxièmes secteurs 54 entre eux étant décalées par rapport aux lignes 56 de jonction des premiers secteurs 52 entre eux, et les boulons 64 sont engagés au travers des premiers et deuxième secteurs 52, 54 se faisant face, au niveau de la zone de contact entre les noyaux 49, 50. Au cours de cet assemblage, le bord 48 de la deuxième pièce mécanique 6 est inséré dans la deuxième fente 46. Les boulons 70 sont alors engagés au travers des flancs 42, 44 et du bord 48.

On obtient alors un assemblage des premier et deuxième éléments structurels 12, 14 et de la pièce mécanique 6.

Ensuite, le cordon pyrotechnique 18 est logé dans le fond de la première fente 26, puis le bord 28 de la première pièce mécanique 4 est inséré dans la première fente 26. Les boulons 70 sont alors engagés au travers des flancs 22, 24 et du bord 28.

On obtient ainsi le dispositif de séparation 2.

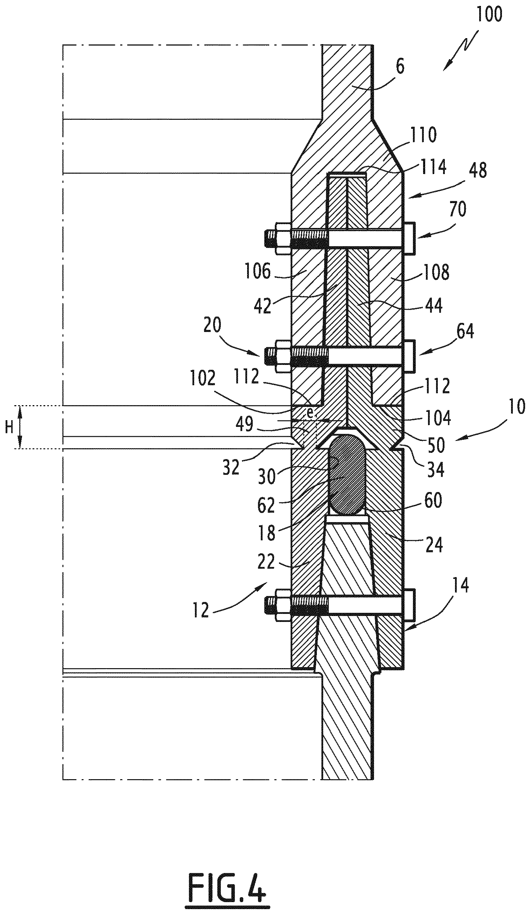

Le dispositif de séparation 100 de la Figure 4 se distingue du dispositif de séparation 2 seulement pour les caractéristiques énoncées ci-après. Les mêmes signes de références sont employés pour les éléments identiques ou correspondants.

En référence à la Figure 4, qui représente un mode de réalisation ne formant pas partie de l'invention, les troisième et quatrième flancs 42, 44 des premier et deuxième éléments structurels 12, 14 ne sont pas espacés l'un de l'autre mais sont accolés l'un contre l'autre.

Le premier noyau 49 a une épaisseur radiale supérieure à celle du troisième flanc 42. Il dépasse à l'opposé du deuxième élément structurel 14 relativement audit troisième flanc 42, définissant ainsi un épaulement radial 102 orienté vers la deuxième pièce 6.

Le deuxième noyau 50 a une épaisseur radiale supérieure à celle du quatrième flanc 44. Il dépasse à l'opposé du premier élément structurel 12 relativement audit quatrième flanc 44, définissant ainsi un épaulement radial 104 orienté vers la deuxième pièce 6.

Le bord inférieur 48 de la deuxième pièce 6 n'est donc pas inséré dans une fente définie par les troisième et quatrième flancs 42, 44. A la place, ledit bord inférieur 48 est formé d'un cinquième flanc 106 et d'un sixième flanc 108 venus de matière avec le reste de la deuxième pièce 6.

Lesdits flancs 106, 108 se font face en s'étendant sensiblement parallèlement l'un à l'autre, depuis une base 110 de raccordement des flancs 106, 108 l'un à l'autre jusqu'à une extrémité libre 112 de chaque flanc 106, 108. L'extrémité libre 112 de chaque flanc 106, 108 est à une distance H des zones de faiblesse 32, 34, ladite distance H étant de préférence inférieure à huit fois l'épaisseur moyenne e des première et deuxième zones de faiblesse 32, 34.

Les flancs 106, 108 sont espacés l'un de l'autre de façon à définir entre eux une fente 114 de réception des premier et deuxième éléments structurels 12, 14, dans laquelle sont insérés les troisième et quatrième flancs 42, 44. Ainsi, les cinquième et sixième flancs 106, 108 enserrent ensemble les premier et deuxième éléments structurels 12, 14 entre lesdits flancs 106, 108.

La fente 114 présente une forme de dépouille, de façon à faciliter l'insertion des troisième et quatrième flancs 42, 44 dans la fente 114.

La fente 114 et les troisième et quatrième flancs 42, 44 présentent de préférence, comme représenté, des formes sensiblement complémentaires, de sorte à minimiser le jeu entre la fente 114 et les troisième et quatrième flancs 42, 44.

Le bord 48 de la deuxième pièce 6 constitue ainsi l'un des moyens d'assemblage 20 des premier et deuxième éléments structurels 12, 14 l'un à l'autre.

Les moyens d'assemblage 20 comprennent également les boulons 64. A la différence du dispositif de séparation 2, ces boulons 64 ne s'étendent pas au travers des noyaux 49, 50, mais au travers des troisième, quatrième, cinquième et sixième flancs 42, 44, 106, 108. De préférence, comme représenté, les boulons 64 sont disposés plus près de l'extrémité libre 112 des cinquième et sixième flancs 106, 108 que de leur base de raccordement 110.

Les moyens de fixation 70 s'étendent également au travers des troisième, quatrième, cinquième et sixième flancs 42, 44, 106, 108. Ils sont disposés plus près de la base de raccordement 110 des cinquième et sixième flancs 106, 108 que de leurs extrémités libres 112.

Un procédé de fabrication du dispositif de séparation 100 va maintenant être décrit.

Ce procédé de fabrication débute tout d'abord par la fabrication des premiers et deuxièmes secteurs 52, 54. A cet effet, des plaques de matériau sont fournies, puis chaque plaque est usinée de manière à lui donner la forme d'un premier ou d'un deuxième secteur 52, 54.

Ensuite, les premiers et deuxièmes secteurs 52, 54 sont assemblés les uns aux autres ainsi qu'à la pièce mécanique 6. A cet effet, les premiers secteurs 52 sont juxtaposés les uns aux autres de manière à former un anneau, en étant orientés de manière à ce que leurs noyaux 49 fassent saillie vers l'extérieur. Simultanément, les deuxièmes secteurs 54 sont disposés à l'extérieur des premiers secteurs 52, leurs noyaux 50 étant appliqués contre les noyaux 49 des premiers secteurs 52, les troisièmes flancs 42 étant appliqués contre les quatrièmes flancs 44, et les lignes 58 de jonction des deuxièmes secteurs 54 entre eux étant décalées par rapport aux lignes 56 de jonction des premiers secteurs 52 entre eux. Simultanément, le bord 48 de la deuxième pièce 6est amené de façon à venir chapeauter les troisième et quatrième flancs 42, 44, puis les boulons 64 et les moyens de fixation 70 sont engagés au travers des premiers et deuxième secteurs 52, 54 se faisant face, en particulier au travers des troisième et quatrième flancs 42, 44 desdits secteurs 52, 54.

On obtient alors un assemblage des premier et deuxième éléments structurels 12, 14 et de la pièce mécanique 6.

Ensuite, le cordon pyrotechnique 18 est logé dans le fond de la première fente 26, puis le bord 28 de la première pièce mécanique 4 est inséré dans la première fente 26. Les derniers moyens de fixation 70 sont alors engagés au travers des flancs 22, 24 et du bord 28.

On obtient ainsi le dispositif de séparation 100.

Ce dispositif de séparation 100 constitue une alternative au dispositif de séparation 2 pour assurer un écartement minimal des premier et deuxième éléments structurels 12, 14 le long de la ligne de liaison 16 lors de l'activation du cordon pyrotechnique 18.

Grâce à l'invention décrite ci-dessus, la fabrication du dispositif de séparation 2 est très simple. En effet, l'usinage des secteurs 52, 54 peut être effectué de façon très facile, sans recourir à des outils d'usinage spéciaux, dans la mesure où les deux faces de chaque secteur 52, 54 sont aisément accessibles pendant l'étape d'usinage. Ensuite, le transport des secteurs 52, 54, qui ne sont que des fragments d'anneau, est facilité par rapport au transport d'un anneau complet.

Un autre avantage de l'invention décrite ici est que cette simplification de la fabrication impacte faiblement l'efficacité de la séparation. En effet, le positionnement de la surface de rupture S à faible distance de la ligne de liaison 16, ainsi que le recours à des moyens d'assemblage 20 assurant un écartement minimal des premier et deuxième éléments structurels 12, 14 le long de la ligne de liaison 16, permet d'assurer une concentration de contraintes dans les zones de faiblesse 32, 34 suffisante pour garantir la rupture desdites zones de faiblesse 32, 34 en cas d'activation du cordon pyrotechnique 18. De plus, le décalage des première et deuxième lignes de jonction 56, 58 évite de générer des discontinuités qui pourraient perturber la séparation.

On notera que l'invention n'est pas limitée aux seuls exemples décrits ci-dessus. En particulier, l'invention n'est pas restreinte aux seuls dispositifs de séparation d'éléments de lanceurs spatiaux, mais s'étend à tous les dispositifs de séparation de pièces mécaniques, comme par exemple les dispositifs de séparation de satellites.

## Revendications

1. Séparateur pyrotechnique (10) conçu pour permettre la séparation entre deux pièces mécaniques (4, 6) temporairement assemblées l'une à l'autre par l'intermédiaire dudit séparateur (10), le séparateur pyrotechnique (10) comprenant :
- un premier et un deuxième flancs (22, 24) liés l'un à l'autre le long d'une ligne de liaison (16), au moins un desdits flancs (22, 24) présentant une zone de faiblesse (32, 34) courant sensiblement parallèlement à la ligne de liaison (16),
- au moins un cordon pyrotechnique (18) apte à se déformer lors de l'activation dudit cordon suivant une direction de déformation, ledit cordon pyrotechnique étant enserré entre les premier et deuxième flancs (22, 24) et courant sensiblement parallèlement à ladite ligne de liaison (16), et
- des moyens (19) d'activation dudit cordon pyrotechnique (18) pour provoquer la rupture d'au moins un des premier et deuxième flancs (22, 24) suivant la ou chaque zone de faiblesse (32, 34),
la ou chaque zone de faiblesse (32, 34) étant interposée entre l'axe du ou de chaque cordon pyrotechnique (18) et la ligne de liaison (16), les premier et deuxième flancs (22, 24) étant formés respectivement par un premier élément structurel (12) et un deuxième élément structurel (14) indépendants l'un de l'autre et assemblés l'un à l'autre le long de la ligne de liaison (16),
**caractérisé en ce que** les premier et deuxième éléments structurels (12, 14) sont encastrés l'un dans l'autre suivant une direction formant un angle avec la direction de déformation du cordon pyrotechnique (18).

2. Séparateur pyrotechnique (10) selon la revendication 1, dans lequel la direction d'encastrement des premier et deuxième éléments structurels (12, 14) est sensiblement orthogonale à la direction de déformation du cordon pyrotechnique (18).

3. Séparateur pyrotechnique (10) selon l'une quelconque des revendications précédentes, dans lequel l'une des pièces mécaniques (4, 6) présente deux flancs (106, 108) enserrant ensemble les premier et deuxième éléments structurels (12, 14) entre lesdits flancs (106, 108), chacun desdits flancs (106, 108) présentant une extrémité libre (112) qui est à une distance (H) de la ou chaque zone de faiblesse (32, 34) inférieure à huit fois l'épaisseur moyenne (e) de la zone ou des zones de faiblesse (32, 34).

4. Séparateur pyrotechnique (10) selon l'une quelconque des revendications précédentes, dans lequel chacun des premier et deuxième élément structurels (12, 14) est formé de la réunion d'une pluralité de secteurs (52, 54) juxtaposés les uns aux autres, les secteurs (52) formant le premier élément structurel (12) définissant entre eux des premières lignes (56) de jonction desdits secteurs (52) les uns aux autres et les secteurs (54) formant le deuxième élément structurel (14) définissant entre eux des deuxièmes lignes (58) de jonction desdits secteurs (54) les uns aux autres, chaque première ligne de jonction (56) étant décalée suivant la ligne de liaison (16) par rapport à chaque deuxième ligne de jonction (58).

5. Séparateur pyrotechnique (10) selon la revendication 4, dans lequel chaque première ligne de jonction (56) est sensiblement à équidistance des deux deuxièmes lignes de jonction (58) les plus proches.

6. Séparateur pyrotechnique (10) selon la revendication 4 ou 5, dans lequel chaque deuxième ligne de jonction (58) est sensiblement à équidistance des deux premières lignes de jonction (56) les plus proches.

7. Séparateur pyrotechnique (10) selon l'une quelconque des revendications précédentes, ayant une forme annulaire ou semi-annulaire.

8. Séparateur pyrotechnique (10) selon la revendication 7, dans lequel le premier flanc (22) est interposé entre l'axe du séparateur (10) et le cordon pyrotechnique (18), et le deuxième flanc (24) est disposé à l'extérieur du séparateur (10) relativement au cordon pyrotechnique (18).

9. Séparateur pyrotechnique (10) selon l'une quelconque des revendications précédentes, comprenant des moyens (20) d'assemblage des premier et deuxième éléments structurels (12, 14) l'un à l'autre, lesdits moyens d'assemblage (20) comportant au moins un élément parmi les éléments suivants : boulon (64) s'étendant au travers des premier et deuxième éléments structurels (12, 14), et rivet.

10. Séparateur pyrotechnique (10) selon l'une quelconque des revendications précédentes, dans lequel la distance de la ou chaque zone de faiblesse (32, 34) à la ligne de liaison (16) est inférieure à huit fois l'épaisseur moyenne de la zone ou des zones de faiblesse (32, 34).

11. Séparateur pyrotechnique (10) selon l'une quelconque des revendications précédentes, dans lequel les zones de faiblesse (32, 34) comprennent une première zone de faiblesse (32) ménagée dans le premier flanc (22) et une deuxième zone de faiblesse (34) ménagée dans le deuxième flanc (24).

12. Procédé de fabrication d'un séparateur pyrotechnique (10) selon l'une quelconque des revendications précédentes, comprenant les étapes suivantes :
- fourniture d'au moins une partie du premier élément structurel (12) et d'au moins une partie du deuxième élément structurel (14), lesdites parties étant séparées l'une de l'autre, et
- assemblage desdites parties l'une à l'autre.

## Patentansprüche

1. Pyrotechnischer Trenner (10), der dazu vorgesehen ist, die Trennung zwischen zwei mechanischen Teilen (4, 6), die vorübergehend über den Trenner (10) aneinander montiert sind, zu ermöglichen, wobei der pyrotechnische Trenner (10) Folgendes umfasst:
- eine erste und eine zweite Seitenfläche (22, 24), die längs einer Verbindungslinie (16) miteinander verbunden sind, wobei wenigstens eine der Seitenflächen (22, 24) eine Schwächungszone (32, 34) aufweist, die im Wesentlichen parallel zu der Verbindungslinie (16) verläuft, und
- wenigstens eine pyrotechnische Schnur (18), die sich bei ihrer Aktivierung längs einer Verformungsrichtung verformen kann, wobei die pyrotechnische Schnur zwischen die erste und die zweite Seitenfläche (22, 24) eingeklemmt ist und im Wesentlichen parallel zu der Verbindungslinie (16) verläuft, und
- Mittel (19) zum Aktivieren der pyrotechnischen Schnur (18), um den Bruch der ersten und/oder der zweiten Seitenfläche (22, 24) längs der oder jeder Schwächungszone (32, 34) hervorzurufen,
wobei die oder jede Schwächungszone (32, 34) zwischen der Achse der oder jeder pyrotechnischen Schnur (18) und der Verbindungslinie (16) eingefügt ist, wobei die erste und die zweite Seitenfläche (22, 24) durch ein erstes Strukturelement (12) bzw. ein zweites Strukturelement (14) gebildet sind, die voneinander unabhängig sind und längs der Verbindungslinie (16) aneinander montiert sind,
**dadurch gekennzeichnet, dass** das erste und das zweite Strukturelement (12, 14) in einer Richtung, die mit der Verformungsrichtung der pyrotechnischen Schnur (18) einen Winkel bildet, ineinander eingesetzt sind.

2. Pyrotechnischer Trenner (10) nach Anspruch 1, wobei die Einsetzrichtung des ersten und des zweiten Strukturelements (12, 14) zu der Verformungsrichtung der pyrotechnischen Schnur (18) im Wesentlichen senkrecht ist.

3. Pyrotechnischer Trenner (10) nach einem der vorhergehenden Ansprüche, wobei eines der mechanischen Teile (4, 6) zwei Seitenflächen (106, 108) aufweist, die zusammen das erste und das zweite Strukturelement (12, 14) zwischen den Seitenflächen (106, 108) einklemmen, wobei jede der Seitenflächen (106, 108) ein freies Ende (112) aufweist, das sich in einem Abstand (H) von der oder jeder Schwächungszone (32, 34) befindet, der kleiner als die achtfache mittlere Dicke (e) der einen oder der mehreren Schwächungszonen (32, 34) ist.

4. Pyrotechnischer Trenner (10) nach einem der vorhergehenden Ansprüche, wobei sowohl das erste als auch das zweite Strukturelement (12, 14) durch die Vereinigung mehrerer nebeneinander liegender Sektoren (52, 54) gebildet ist, wobei die Sektoren (52), die das erste Strukturelement (12) bilden, zwischen sich erste Linien (56) für den Übergang der Sektoren (52) ineinander definieren und wobei die Sektoren (54), die das zweite Strukturelement (14) bilden, zwischen sich zweite Linien (58) für den Übergang der Sektoren (54) ineinander definieren, wobei jede erste Übergangslinie (56) längs der Verbindungslinie (16) in Bezug auf jede zweite Übergangslinie (58) versetzt ist.

5. Pyrotechnischer Trenner (10) nach Anspruch 4, wobei sich jede Übergangslinie (56) im Wesentlichen im gleichen Abstand von den zwei nächsten zweiten Übergangslinien (58) befindet.

6. Pyrotechnischer Trenner (10) nach Anspruch 4 oder 5, wobei sich jede zweite Übergangslinie (58) im Wesentlichen im gleichen Abstand von den zwei nächsten ersten Übergangslinien (56) befindet.

7. Pyrotechnischer Trenner (10) nach einem der vorhergehenden Ansprüche, der ringförmig oder halbringförmig ist.

8. Pyrotechnischer Trenner (10) nach Anspruch 7, wobei die erste Seitenfläche (22) zwischen die Achse des Trenners (10) und die pyrotechnische Schnur (18) eingesetzt ist und die zweite Seitenfläche (24) außerhalb des Trenners (10) relativ zu der pyrotechnischen Schnur (18) angeordnet ist.

9. Pyrotechnischer Trenner (10) nach einem der vorhergehenden Ansprüche, der Mittel (20) zum Montieren des ersten und des zweiten Strukturelements (12, 14) aneinander umfasst, wobei die Montagemittel (20) wenigstens eines der folgenden Elemente umfassen: Bolzen (64), der sich durch das erste und das zweite Strukturelement (12, 14) erstreckt, und Niet.

10. Pyrotechnischer Trenner (10) nach einem der vorhergehenden Ansprüche, wobei der Abstand der oder jeder Schwächungszone (32, 34) zu der Verbindungslinie (16) kleiner als die achtfache mittlere Dicke der oder jeder Schwächungszone (32, 34) ist.

11. Pyrotechnischer Trenner (10) nach einem der vorhergehenden Ansprüche, wobei die Schwächungszonen (32, 34) eine erste Schwächungszone (32), die in der ersten Seitenfläche (22) ausgebildet ist, und eine zweite Schwächungszone (34), die in der zweiten Fläche (24) ausgebildet ist, umfassen.

12. Verfahren zum Herstellen eines pyrotechnischen Trenners (10) nach einem der vorhergehenden Ansprüche, das die folgenden Schritte umfasst:
- Bereitstellen wenigstens eines Teils des ersten Strukturelements (12) und wenigstens eines Teils des zweiten Strukturelements (14), wobei die Teile voneinander getrennt sind, und
- Montieren der Teile aneinander.

## Claims

1. Pyrotechnical separator (10) designed to allow the separation between two mechanical parts (4, 6) temporarily assembled together via said separator (10), the pyrotechnical separator (10) comprising:
- a first and a second flank (22, 24) connected with one another along a connection line (16), at least one of said flanks (22, 24) having an zone of weakness (32, 34) running substantially parallel to the connection line (16),
- at least one pyrotechnical cord (18) capable of being deformed during activation of said cord along a direction of deformation, said pyrotechnical cord being enclosed between the first and second flanks (22, 24) and running substantially parallel to said connection line (16), and
- means (19) of activation of said pyrotechnical cord (18) to cause the breakage of at least one of the first and second flanks (22, 24) along the or each zone of weakness (32, 34),
the or each zone of weakness (32, 34) being interposed between the axis of the or each pyrotechnical cord (18) and the connection line (16), the first and second flanks (22, 24) being formed respectively by a first structural element (12) and a second structural element (14) independent of each other and assembled with one another along the connection line (16),
**characterized in that** the first and second structural elements (12, 14) are flush-fitted together along a direction forming an angle with the direction of deformation of the pyrotechnical cord (18).

2. Pyrotechnical separator (10) according to claim 1, wherein the direction of flush-fit of the first and second structural elements (12, 14) is substantially orthogonal to the direction of deformation of the pyrotechnical cord (18).

3. Pyrotechnical separator (10) according to any one of the preceding claims, wherein one of the mechanical parts (4, 6) has two flanks (106, 108) which together clasp the first and second structural elements (12, 14) between said flanks (106, 108), each of said flanks (106, 108) having one free end (112) which is at a distance (H) from the or each zone of weakness (32, 34) less than eight times the average thickness (e) of the area or areas of weakness (32, 34).

4. Pyrotechnical separator (10) according to any one of the preceding claims, wherein each of the first and second structural elements (12, 14) is formed from the joining of a plurality of sectors (52, 54) juxtaposed upon each other, the sectors (52) that form the first structural element (12) defining among them first lines (56) of junction of said sectors (52) with each other, and the sectors (54) that form the second structural element (14) defining among them second lines (58) of junction of said sectors (54) with each other, each first line of junction (56) being offset along the connection line (16) relative to each second line of junction (58).

5. Pyrotechnical separator (10) according to claim 4 wherein each first line of junction (56) is substantially equidistant from the two closest second lines of junction (58).

6. Pyrotechnical separator (10) according to claim 4 or 5, wherein each second line of junction (58) is substantially equidistant from the two closest second lines of junction (56).

7. Pyrotechnical separator (10) according to any one of the preceding claims, having an annular or semi-annular form.

8. Pyrotechnical separator (10) according to claim 7, wherein the first flank (22) is interposed between the axis of the separator (10) and the pyrotechnical cord (18), and the second flank (24) is disposed at the exterior of the separator (10) relative to the pyrotechnical cord (18).

9. Pyrotechnical separator (10) according to any one of the preceding claims, comprising means (20) of assembling together the first and second structural elements (12, 14), said means of assembly (20) comprising at least one element from among the following elements: bolt (64) extending through the first and second structural elements (12, 14), and rivet.

10. Pyrotechnical separator (10) according to any one of the preceding claims, wherein the distance from the or each zone of weakness (32, 34) to the connection line (16) is less than eight times the average thickness of the zone or zones of weakness (32, 34).

11. Pyrotechnical separator (10) according to any one of the preceding claims, wherein the zones of weakness (32, 34) comprise a first zone of weakness (32) made in the first flank (22) and a second zone of weakness (34) made in the second flank (24).

12. Method of manufacturing a pyrotechnical separator (10) according to any one of the preceding claims, the method comprising the following steps:
- supplying at least one portion of the first structural element (12) and at least one portion of the second structural element (14), said portions being separated from each other, and
- assembling said portions together.
